# EUROPÄISCHE PATENTSCHRIFT

(11) **EP 0 999 972 B1**
(45) Veröffentlichungstag und Bekanntmachung des Hinweises auf die Patenterteilung: **20.06.2001**
(21) Anmeldenummer: 98941402.4
(22) Anmeldetag: 22.07.1998
(51) Int. Cl.: B62D 5/083

(54) **SERVOVENTIL**
SERVO VALVE
SERVO-SOUPAPE

(30) Priorität: 31.07.1997 DE 19733031
(43) Veröffentlichungstag der Anmeldung: 17.05.2000
(73) Patentinhaber: Mercedes-Benz Lenkungen GmbH, 40476 Düsseldorf (DE)
(72) Erfinder: BREUNING, Edwin, D-73770 Denkendorf (DE); SCHIEK, Bernd, D-73650 Winterbach (DE); SPEIDEL, Gerd, D-73650 Winterbach (DE)
(74) Vertreter: Dahmen, Toni, Dipl.-Ing.
(86) Internationale Anmeldenummer: EP9804599
(87) Internationale Veröffentlichungsnummer: WO9906263

(56) Entgegenhaltungen:
- EP-A- 0 072 712
- DE-A- 4 234 571
- DE-A- 19 615 543

## Beschreibung

Die Erfindung betrifft ein Servoventil, insbesondere für hydraulische Servolenkungen von Kraftfahrzeugen, in Form eines Drehschieberventiles mit einem Drehschieber und einer diesen koaxial umfassenden, relativ zum Drehschieber gegen Federkraft drehbaren Steuerbuchse.

Derartige Servoventile sind bspw. Aus der DE 42 34 571 A1 sowie der US 4,966,192 bekannt. Im Falle einer Servolenkung bilden dabei der Drehschieber und die Steuerbuchse Teile eines Wellenzuges, der ein Lenkhandrad mit den gelenkten Fahrzeugrädern mechanisch koppelt. Dabei sind ein mit der Steuerbuchse drehfest verbundener Wellenteil und ein den Drehschieber tragender bzw. aufweisender Wellenteil miteinander durch einen Drehstab axial fest, jedoch drehelastisch verbunden. Entsprechend den zwischen Lenkhandrad und Fahrzeuglenkrädern wirksamen Kräften und Momenten werden der Drehschieber und die Steuerbuchse relativ zueinander mehr oder weniger weit aus einer relativen Mittellage ausgelenkt. Dieser Drehhub zwischen Steuerbuchse und Drehschieber bewirkt, daß ein vom Servoventil gesteuerter hydraulischer Servomotor mit hydraulischem Druck bzw. einer hydraulischen Druckdifferenz in der einen oder anderen Richtung, je nach Richtung der relativen Verdrehung zwischen Steuerbuchse und Drehschieber, steuerbar beaufschlagt wird und das jeweilige Lenkmanöver unterstützt, d.h. die am Lenkhandrad aufzubringende Handkraft entsprechend vermindert.

Die Federkraft wird typischerweise durch einen Drehstab erzeugt, der den Drehschieber mit der Steuerbuchse mechanisch koppelt. Zur Unterbringung des Drehstabes sind der Drehschieber sowie daran axial anschließende Teile der Steuerbuchse bzw. mit der Steuerbuchse drehfest verbundene Elemente rohrförmig ausgebildet.

In der nach dem beanspruchten Prioritätsdatum veröffentlichten DE 196 15 543 A wird ein Servoventil der eingangs angegebenen Art beschrieben, bei dem
- an einem Stirnende der Steuerbuchse ein erster axialer Fortsatz exzentrisch zur Achse des Drehschieberventiles angeordnet ist,
- mit axialem Abstand vom freien Ende dieses Fortsatzes an einem mit dem Drehschieber drehfesten Teil eine dem vorgenannten Stirnende zugewandte Stirnfläche mit einem zum ersten Fortsatz gleichartigen weiteren Fortsatz angeordnet ist, der von der Achse des Drehschieberventiles gleichen radialen Abstand wie der erste Fortsatz aufweist,
- die axiale Gesamtlänge der Fortsätze etwas kürzer als der axiale Abstand zwischen dem genannten Stirnende der Steuerbuchse und der vorgenannten Stirnfläche ist, und
- zwischen dem genannten Stirnende der Steuerbuchse und der genannten Stirnfläche eine den Drehschieber umfassende C-Feder angeordnet ist, deren freie Enden gegen die Fortsätze gespannt sind und diese in eine miteinander fluchtende Lage zu drängen suchen.

Hier wird der allgemeine Gedanke verwirklicht, axial zwischen einem Stirnende der Steuerbuchse und einem drehschieberseitigen Teil eine ringähnliche, einen Drehschieberabschnitt umfassende Feder anzuordnen, welche bei Relativdrehungen zwischen Steuerbuchse und Drehschieber aufgrund der sich dabei von einander in Umfangsrichtung des Drehschieberabschnittes entfernenden Fortsätze mehr oder weniger weit aufgebogen wird.

Ein besonderer Vorzug dieser Konstruktion liegt in der leichten Montierbarkeit der C-Feder. Darüber hinaus kann die C-Feder auch mit Vorspannung ausgebildet sein, derart, daß auch bei miteinander fluchtenden Stiften noch eine vorgegebene Federspannung vorliegt.

Nach dieser älteren Patentanmeldung ist in der Regel vorgesehen, den Drehschieber und die Steuerbuchse zusätzlich über einen Drehstab zu verbinden, der innerhalb eines rohrförmigen Innenraumes des Drehschiebers untergebracht ist und an seinem einen Ende, beispielsweise durch Verstiftung, fest mit dem Drehschieber und an seinem anderen Ende fest mit der Steuerbuchse oder dazu drehfesten Teilen verbunden ist. Dieser Drehstab bewirkt zusätzlich zur vorgenannten C-Feder bei Relativdrehungen zwischen Steuerbuchse und Drehschieber eine zunehmende Rückstellkraft.

Außerdem dient der Drehstab dazu, Steuerbuchse und Drehschieber relativ zu einander axial festzuhalten.

Aufgabe der Erfindung ist es nun, in konstruktiv einfacher Weise bei einem Servoventil der eingangs angegebenen Art auch dann eine axial feste Lage von Drehschieber und Steuerbuchse relativ zueinander zu gewährleisten, wenn auf die Anordnung eines Drehstabes verzichtet wird.

Diese Aufgabe wird erfindungsgemäß dadurch gelöst, daß die Steuerbuchse mit einer gleichachsigen Hülse fest verbunden und axial zwischen der Steuerbuchse und der Hülse ein Lager angeordnet bzw. ausgebildet ist, welches die Steuerbuchse und den Drehschieber relativ zueinander axial fest hält.

Die Erfindung beruht auf dem allgemeinen Gedanken, in das Drehschieberventil ein Lager zu integrieren und zu dessen einfacher Anordnung bzw. Ausbildung die Steuerbuchse mit einer daran axial anschließenden Hülse zu einem das Lager umfassenden zerlegbaren Rohrteil zusammenzufassen.

Im Ergebnis kann damit eine Anordnung erreicht werden, die sich dadurch montieren läßt, daß Teile axial aufeinander aufgeschoben bzw. axial aneinander gesetzt werden.

Vorzugsweise ist vorgesehen, die Schieberbuchse und den Drehschieber mittels einer vorgespannten C-Feder in eine mittlere Drehstellung relativ zueinander zu drängen. In diesem Zusammenhang ist es zweckmäßig, wenn
- an dem von der Steuerbuchse abgewandten Stirnende der Hülse ein erster axialer Fortsatz exzentrisch zur Achse des Drehschieberventiles angeordnet ist,
- mit axialem Abstand vom freien Ende dieses Fortsatzes an einem mit dem Drehschieber drehfesten Teil eine dem vorgenannten Stirnende zugewandte Stirnfläche mit einem zum ersten Fortsatz gleichartigen weiteren Fortsatz angeordnet ist, der von der Achse des Drehschieberventiles gleichen radialen Abstand wie der erste Fortsatz aufweist,
- die axiale Gesamtlänge der Fortsätze etwas kürzer als der axiale Abstand zwischen dem genannten Stirnende der Hülse und der genannten Stirnfläche des am Drehschieber drehfesten Teiles ist, und
- zwischen dem genannten Stirnende der Hülse und der genannten Stirnfläche des zum Drehschieber drehfesten Teiles die C-Feder angeordnet ist, derart, daß diese C-Feder den Drehschieber abschnittsweise umfaßt und mit ihren freien Enden gegen die Fortsätze gespannt ist.

Diese Bauweise bietet neben leichter Montierbarkeit den Vorzug, daß bei der Verbindung von Steuerbuchse und Hülse eine Drehjustierung der Steuerbuchse relativ zur Hülse und damit zum hülsenseitigen Fortsatz ermöglicht wird, der seinerseits zusammen mit dem anderen Fortsatz im Zusammenwirken mit der C-Feder die mittlere Drehstellung bzw. Ausgangslage des Drehschieberventiles vorgibt.

Im übrigen wird hinsichtlich bevorzugter Merkmale der Erfindung auf die Ansprüche und die nachfolgende Erläuterung der Zeichnung verwiesen, anhand der besonders bevorzugte Ausführungsformen der Erfindung beschrieben werden.

Dabei zeigt
- Fig. 1: eine Axialschnitt des erfindungsgemäßen, als Drehschieberventil ausgebildeten Servoventiles,
- Fig. 2: ein Schnittbild entsprechend der Schnittlinie II-II in Fig. 1,
- Fig. 3: ein der Fig. 2 entsprechendes Schnittbild einer abgewandelten Ausführungsform und
- Fig. 4: ein Diagramm, welches die Federcharakteristik der C-Feder wiedergibt.

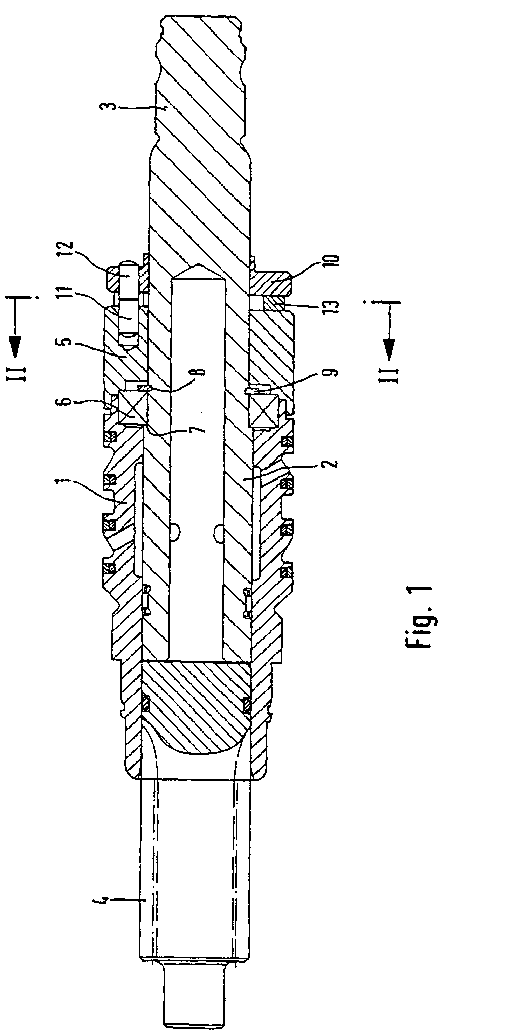

In grundsätzlich bekannter Weise besitzt das erfindungsgemäße Servoventil gemäß Fig. 1 eine Steuerbuchse 1, welche koaxial einen Drehschieber 2 umfaßt, wobei Steuerbuchse 1 und Drehschieber 2 relativ zueinander drehbar sind. Der Drehschieber 2 ist mit einer Axialbohrung versehen und setzt sich in Fig. 1 nach rechts in ein Wellenteil 3 fort. Die Steuerbuchse 1 ist drehfest mit einem Wellenteil 4 gekuppelt. Dieses besitzt eine am linken Stirnende des Wellenteiles 4 offene Axialverzahnung, welche sich bis in den von der Steuerbuchse 1 überlappten Bereich des Wellenteiles 4 fortsetzt und nahe des unverzahnten rechten Stirnendes des Wellenteiles 4 ausläuft. Die Steuerbuchse 1 besitzt an ihrem linken Endbereich eine in die vorgenannte Axialverzahnung des Wellenteiles 4 passende Innenverzahnung. Im montierten Zustand des dargestellten Servoventiles wird das Wellenteil 4 axial festgehalten, indem seine rechte Stirnseite an die zugewandte Stirnseite des Drehschiebers 2 anstößt und der von dieser Stirnseite abgewandte Endbereich des unverzahnten Abschnittes des Wellenteiles 4 anschlagartig mit der Innenverzahnung der Steuerbuchse 1 zusammenwirkt.

Nach rechts schließt sich an die Steuerbuchse 1 eine dazu gleichachsige Hülse 5 an, die mit der Steuerbuchse 1 fest verbunden ist. Die Verbindung ist derart ausgebildet, daß innerhalb des Verbindungsbereiches von der Steuerbuchse 1 und der Hülse 5 ein axial und vorzugsweise auch radial belastbares Lager 6 an dessen Außenseite bzw. an deren äußerer Lagerschale axial fest umfaßt wird. Die Innenseite bzw. die innere Lagerschale des Lagers 6 sind axial fest am Drehschieber 2 bzw. am Wellenteil 3 gehaltert. Dazu ist am Drehschieber 2 bzw. am Wellenteil 3 eine Ringstufe 7 mit nach rechts weisender Frontseite ausgebildet, in deren Nachbarschaft in der Außenseite des Drehschiebers 2 bzw. des Wellenteiles 3 eine Ringnut 8 für einen Federring 9 angeordnet ist, so daß das Lager 6 einerseits zwischen Steuerbuchse 1 und Hülse 5 und andererseits zwischen der Ringstufe 7 und dem Federring 9 axial fest gehaltert wird und dementsprechend die Steuerbuchse 1 und den Drehschieber 2 relativ zueinander axial haltert.

Mit axialem Abstand vom rechten Stirnende der Hülse 5 ist am Drehschieber 2 bzw. am Wellenteil 3 ein Flansch 10 fest angeordnet. An den einander zugewandten Stirnseiten von Hülse 5 und Flansch 10 sind gleichartige, zur gemeinsamen Achse von Steuerbuchse 1 und Drehschieber 2 parallele Stifte 11 und 12 gehaltert, die von der Drehschieber- und Steuerbuchsenachse gleiche Abstände aufweisen. Die Gesamtlänge der freien Enden der Stifte 11 und 12 ist geringfügig kleiner als der axiale Abstand zwischen den einander zugewandten Stirnflächen von Hülse 5 und Flansch 10, so daß die Stifte 11 und 12 eine Relativdrehung zwischen der Hülse 5 und dem Flansch 10 bzw. dem damit drehfest verbundenen Drehschieber 2 oder Wellenteil 3 nicht behindern können.

Im axialen Abstandsraum zwischen Hülse 5 und Flansch 10 ist eine den Drehschieber 2 bzw. das Wellenteil 3 umfassende C-Feder 13 angeordnet, deren axiale Breite in Richtung der Achse von Steuerbuchse 1 und Drehschieber 2 etwa den axialen Abstand zwischen den einander zugewandten Stirnflächen von Hülse 5 und Flansch 10 entspricht.

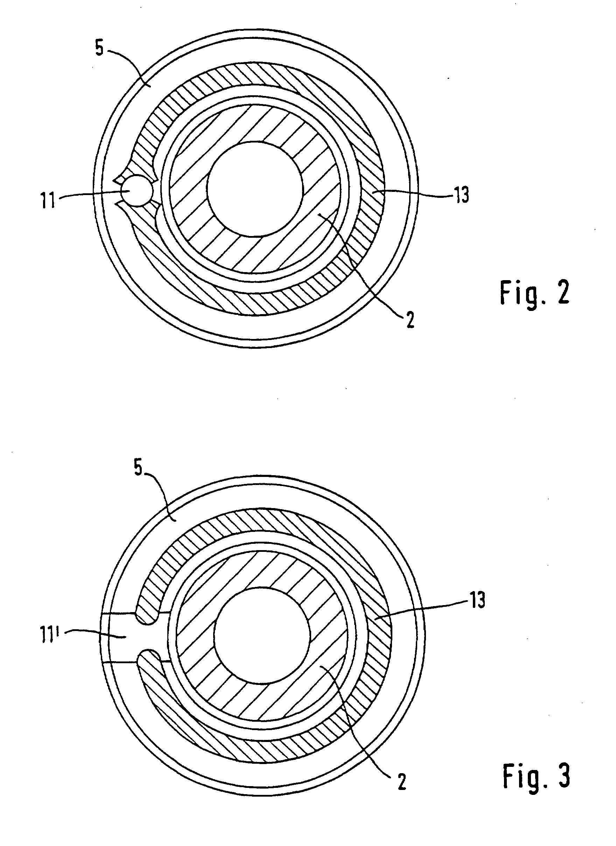

Die freien Enden der C-Feder 10 sind gegen die Stifte 11 und 12 gespannt, welche von halbrohrförmigen, d.h. ein halbkreisförmiges Profil aufweisenden Endflächen der C-Feder 13 formschlüssig aufgenommen werden, vgl. Fig. 2.

Bei Relativdrehungen zwischen der Hülse 5 und dem Flansch 10 bzw. zwischen der Steuerbuchse 1 und dem Drehschieber 2 entfernen sich die Stifte 11 und 12 in Umfangsrichtung des Drehschiebers 2 voneinander, wobei die C-Feder 13 mehr oder weniger weit aufgespreizt wird, weil ihr eines Ende jeweils vom Stift 11 und ihr anderes Ende jeweils vom anderen Stift 12 mitgenommen wird. Damit erzeugt die C-Feder 13 eine zunehmende Rückstellkraft, welche die Stifte 11 und 12 in eine zueinander fluchtende Lage zu bringen sucht, in der die Steuerbuchse 1 und der Drehschieber 2 ihre relative Mittellage einnehmen.

Vorzugsweise besitzt die C-Feder 13 eine Vorspannung, welche auch bei miteinander fluchtenden Stiften 11 und 12 wirksam ist. Damit kann eine Relativdrehung zwischen Steuerbuchse 1 und Drehschieber 2 erst dann auftreten, wenn zwischen diesen beiden Teilen ein Drehmoment wirkt, welches größer als die genannte Vorspannung ist.

Die in Fig. 3 dargestellte Ausführungsform unterscheidet sich von der vorangehend anhand der Fig. 1 und 2 beschriebenen Konstruktion im wesentlichen dadurch, daß statt der Stifte 11 und 12 jeweils axiale Fortsätze 11' und 12' angeordnet sind, die an ihrem zur Achse der Steuerbuchse 1 im wesentlichen radialen Flanken beidseitig rinnenförmige Ausnehmungen mit halbkreisförmigem Profil und gleichen radialen Abständen von der Achse der Steuerbuchse 1 aufweisen. In diese Ausnehmungen greift die C-Feder 13 mit gegengleich profilierten Enden ein, so daß sich im Ergebnis die gleiche Funktion wie bei der Ausführungsform der Fig. 1 und 2 ergibt.

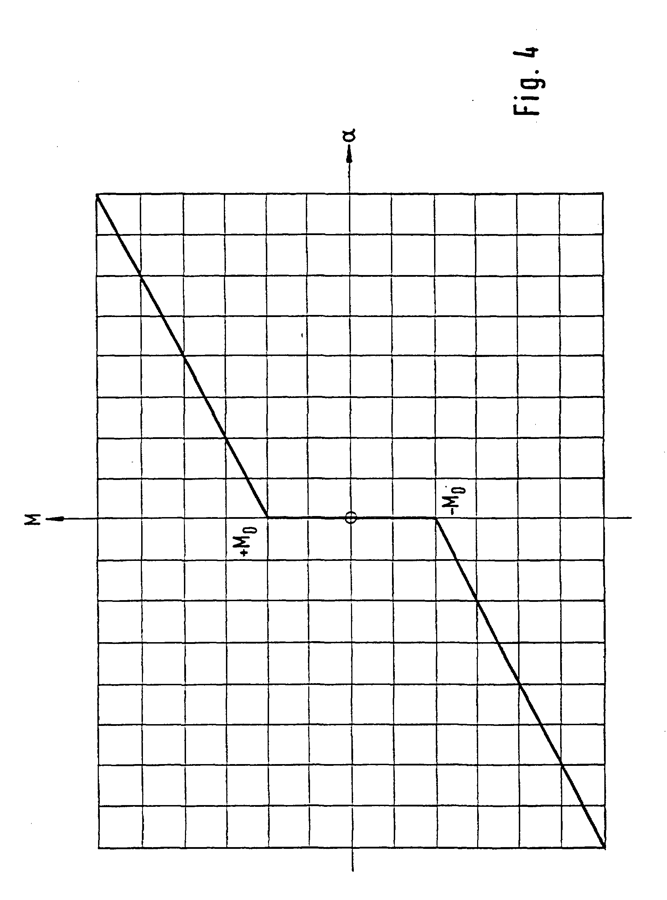

Das Diagramm der Fig. 4 zeigt die Charakteristik der C-Feder 13, d.h. das von der Feder 13 bewirkte Rückstellmoment M ist in Abhängigkeit vom Verdrehwinkel α zwischen der Steuerbuchse 1 und dem Steuerschieber 2 dargestellt. Aufgrund der Vorspannung der C-Feder 13 muß beim Verlassen der Mittellage von Steuerbuchse 1 und Drehschieber 2 jeweils ein Anfangsmoment + M₀ bzw. - M₀ überwunden werden, wobei das Vorzeichen die relative Drehrichtung bezeichnet. Bei größer werdenden Verdrehwinkeln ergibt sich dann ein kontinuierlich ansteigendes Rückstellmoment.

Wenn die Wellenteile 3 und 4 als Teil eines mechanischen Durchtriebes zwischen gelenkten Fahrzeugrädern und einem Lenkhandrad oder einer sonstigen Lenkhandhabe eines Fahrzeuges angeordnet sind, wird zwischen Steuerbuchse 1 und Drehschieber 2 keine Drehverstellung relativ zur Mittellage auftreten, solange zwischen Lenkhandrad bzw. Lenkhandhabe und gelenkten Fahrzeugrädern nur geringe Lenkmomente übertragen werden. Erst wenn das Maß der Lenkmomente den Betrag von Mₒ überschreitet, werden die Steuerbuchse 1 und der Drehschieber 2 mehr oder weniger weit relativ zueinander verdreht, mit der Folge, daß nunmehr das von der Steuerbuchse 1 und dem Drehschieber 2 gebildete Servoventil einen Servomotor der Fahrzeuglenkung zur Erzeugung einer mehr oder weniger großen, das jeweilige Lenkmanöver unterstützenden Servokraft ansteuert. Bei Lenkmomenten, die geringer als der Betrag von M₀ bleiben, erzeugt der Servomotor keine Servokraft. Auf diese Weise ist gewährleistet, daß der Fahrer am Lenkhandrad bzw. an der Lenkhandhabe ein gutes Gefühl für den jeweiligen Fahrbahnzustand erhält.

## Patentansprüche

1. Servoventil, insbesondere für hydraulische Servolenkungen von Kraftfahrzeugen, in Form eines Drehschieberventiles mit einem Drehschieber (2) und einer diesen koaxial umfassenden, relativ zum Drehschieber gegen Federkraft (13) drehbaren Steuerbuchse (1),
**dadurch gekennzeichnet,**
daß die Steuerbuchse (1) mit einer gleichachsigen Hülse (5) verbunden und axial zwischen der Steuerbuchse (1) und der Hülse (5) ein Lager angeordnet bzw. ausgebildet ist, welches die Steuerbuchse (1) und den Drehschieber (2) relativ zueinander zumindest axial festhält.

2. Servoventil nach Anspruch 1,
**dadurch gekennzeichnet,**
daß die Steuerbuchse (1) durch formschlüssige Kupplung drehfdst mit einem Wellenteil (4) verbunden ist, welches einerseits durch Anschlag seines einen Stirnendes am zugewandten Stirnende des Drehschiebers (2) und andererseits durch einen Axialanschlag an der Formschlußkupplung axial gehaltert ist.

3. Servoventil nach Anspruch 2,
**dadurch gekennzeichnet,**
daß das Wellenteil (4) eine axiale Außenverzahnung besitzt, welche am drehschieberseitigen Ende des Wellenteiles (4) unter Bildung eines Anschlages ausläuft, der mit einer entsprechenden Innenverzahnung der Steuerbuchse (1) oder Hülse (5) zusammenwirkt.

4. Servoventil nach einem der Ansprüche 1 bis 3,
**dadurch gekennzeichnet**,
daß
• an einem Stirnende der Hülse (5) ein erster axialer Fortsatz (11,11') exzentrisch zur Achse des Drehschieberventiles angeordnet ist,
• mit axialem Abstand vom freien Ende dieses Fortsatzes (11,11') an einem mit dem Drehschieber (2) drehfesten Teil (10) eine dem vorgenannten Stirnende zugewandte Stirnfläche mit einem zum ersten Fortsatz (11,11') gleichartigen weiteren Fortsatz (12,12') angeordnet ist, der von der Achse des Drehschieberventiles gleichen radialen Abstand wie der erste Fortsatz (11,11') aufweist,
• die axiale Gesamtlänge der Fortsätze (11,11';12,12') etwas kürzer als der axiale Abstand zwischen dem genannten Stirnende der Hülse (5) und der genannten Stirnfläche des zum Drehschieber (2) drehfesten Teiles (10) ist, und
• zwischen dem genannten Stirnende der Hülse (5) und der genannten Stirnfläche des zum Drehschieber (2) drehfesten Teiles (10) eine den Drehschieber (2) bzw. ein den Drehschieber (2) axial fortsetzendes Wellenteil (3) abschnittsweise umfassende C-Feder (13) angeordnet ist, deren freien Enden gegen die Fortsätze (11,11';12,12') gespannt sind und diese in eine miteinander fluchtende Lage zu drängen suchen.

5. Servoventil nach Anspruch 4,
**dadurch gekennzeichnet**,
daß die C-Feder (13) vorgespannt ist und auch bei miteinander fluchtenden Fortsätzen (11,11';12,12') noch gespannt bleibt.

6. Servoventil nach einem der Ansprüche 1 bis 5,
**dadurch gekennzeichnet**,
daß das Lager (6) die Steuerbuchse (1) und den Drehschieber (2) relativ zueinander axial und radial haltert.

## Claims

1. Servovalve, in particular for hydraulic power-assisted steering systems of motor vehicles, in the form of a rotary spool valve with a rotary spool (2) and a control bush (1), which coaxially surrounds the rotary spool and can be rotated against spring force (13) relative to the rotary spool, characterized in that the control bush (1) is connected to a sleeve (5) on the same axis and a bearing is arranged or configured axially between the control bush (1) and the sleeve (5), which bearing (6) secures the control bush (1) and the rotary spool (2) at least axially relative to one another.

2. Servovalve according to Claim 1, characterized in that the control bush (1) is torsionally connected by form-fit coupling to a shaft part (4), which is secured axially by contact between one of its end faces and the end face of the rotary spool (2) facing towards it, on the one hand, and by an axial stop on the form-fit coupling, on the other.

3. Servovalve according to Claim 2, characterized in that the shaft part (4) has external axial splines which run out at the rotary spool end of the shaft part (4) to form a stop, which interacts with corresponding internal splines of the control bush (1) or sleeve (5).

4. Servovalve according to one of Claims 1 to 3, characterized in that
- a first axial extension (11, 11') is arranged eccentrically to the axis of the rotary spool valve at one end face of the sleeve (5),
- an end surface, which faces towards the aforesaid end face, has a further extension (12, 12') of the same type as the first extension (11, 11') and has the same radial distance from the axis of the rotary spool valve as the first extension (11, 11'), is arranged at an axial distance from the free end of this extension (11, 11') on a part (10) which is torsionally connected to the rotary spool (2),
- the total axial length of the extensions (11, 11'; 12, 12') is somewhat shorter than the axial distance between the said end face of the sleeve (5) and the said end surface of the part (10) which is torsionally connected to the rotary spool (2), and
- a C-spring (13), which surrounds a section of the rotary spool (2), or a section of a shaft part (3) axially extending the rotary spool (2), is arranged between the said end face of the sleeve (5) and the said end surface of the part (10) torsionally connected to the rotary spool (2), the free ends of which C-spring are clamped against the extensions (11, 11'; 12, 12') and try to force the latter into a mutually aligned position.

5. Servovalve according to Claim 4, characterized in that the C-spring (13) is preloaded and still remains clamped even when the extensions (11, 11'; 12, 12') are mutually aligned with one another.

6. Servovalve according to one of Claims 1 to 5, characterized in that the bearing (6) secures the control bush (1) and the rotary spool (2) axially and radially relative to one another.

## Revendications

1. Soupape d'asservissement, en particulier pour des servo-directions hydrauliques de véhicules automobiles, réalisée sous la forme d'une soupape à registre rotatif, munie d'un registre rotatif (2) et d'un manchon de commande (1) entourant celui-ci coaxialement, susceptible de tourner par rapport au registre rotatif, à l'encontre de la force d'un ressort (13),
caractérisée en ce que,
la douille de commande (1) est reliée à une douille (5) coaxiale et, axialement, entre le manchon de commande (1) et la douille (5), est disposé ou réalisé un palier, qui fixe au moins axialement l'un par rapport à l'autre le manchon de commande (1) et le registre rotatif (2).

2. Soupape d'asservissement selon la revendication 1,
caractérisée en ce que le manchon de commande (1) est relié, à l'aide d'un accouplement à ajustement de forme, de façon assujettie en rotation à une partie d'arbre (4), qui est maintenue axialement, d'une part, par mise en butée d'une de ses extrémités frontales sur l'extrémité frontale tourné vers elle du registre rotatif (2) et, d'autre part, par une butée axiale, sur l'accouplement 'à liaison par ajustement de forme.

3. Soupape d'asservissement selon la revendication 2,
caractérisée en ce que partie d'arbre (4) comporte une denture extérieure axiale, qui évolue, à l'extrémité, située côté registre rotatif, de la partie d'arbre (4) en formant une butée, qui coopère avec une denture intérieure correspondante du manchon de commande (1) ou de la douille (5).

4. Soupape d'asservissement selon l'une des revendications 1 à 3, caractérisé en ce qu'
. un premier prolongement axial (11, 11') est disposé excentriquement par rapport à l'axe de la soupape à registre rotatif, à une extrémité frontale de la douille (5).
. à distance axiale de l'extrémité libre de ce prolongement (11, 11') est disposée, sur une partie (10), assujettie en rotation au registre rotatif (2), une face frontale, tournée vers l'extrémité frontale précitée, avec un autre prolongement (12, 12') du même genre que le premier prolongement (11, 11') présentant, par rapport à l'axe de la soupape à registre rotatif, le même espacement radial que le même espacement radial que le premier prolongement (11, 11').
. la longueur globale axiale des prolongements (11, 11' ; 12, 12') est un peu inférieure à l'espacement axial entre l'extrémité frontale citée de la douille (5) et la face frontale citée de la partie (10), assujettie en rotation au registre rotatif (2), et
. entre l'extrémité frontale citée de la douille (5) et la face frontale citée de la partie (10), assujettie en rotation au registre rotatif (2), est disposé un ressort en C (13), entourant par parties le registre rotatif (2) ou une partie d'arbre (3) prolongeant axialement le registre rotatif (2), ressort dont les extrémités libres sont serrées contre les prolongements (11, 11',12, 12') et tentent de faire passer ceux-ci en une position mutuellement alignée.

5. Soupape d'asservissement selon la revendication 4,
caractérisée en ce que le ressort en C (13) est précontraint et reste encore contraint, même lorsque les prolongements (11, 11',12, 12') sont alignés l'un, l'autre.

6. Soupape d'asservissement selon l'une des revendications 1 à 5, caractérisée en ce que le palier (6) fixe le manchon de commande (1) et le registre rotatif (2), axialement et radialement l'un par rapport à l'autre.
